# FASCICULE DE BREVET EUROPEEN

(11) **EP 1 865 762 B1**
(45) Date de publication et mention de la délivrance du brevet: **22.09.2010**
(21) Numéro de dépôt: 06726032.3
(22) Date de dépôt: 06.03.2006
(51) Int. Cl.: A01D 43/063

(54) **DISPOSITIF POUR LE REMPLISSAGE D'UN SAC ETANCHE PAR DES ELEMENTS VEHICULES PAR UN FLUX GENERE PAR UN EQUIPEMENT**
VORRICHTUNG ZUM FÜLLEN EINES VERSCHLOSSENEN BEUTELS MIT VON EINEM DURCH EINE EINRICHTUNG ERZEUGTEN STROM MITGEFÜHRTEN ELEMENTEN
DEVICE FOR FILLING A SEALED BAG WITH ELEMENTS CARRIED BY A FLOW GENERATED BY AN EQUIPMENT

(30) Priorité: 07.03.2005 FR 0502236
(43) Date de publication de la demande: 19.12.2007
(60) Demande divisionnaire: 10161490.7
(73) Titulaire: Appert, Sylvain, 78180 Montigny le Bretonneux (FR)
(72) Inventeur: Appert, Sylvain, 78180 Montigny le Bretonneux (FR)
(74) Mandataire: Lebrette, Camille
(86) Numéro de dépôt international: PCT/FR2006/000500
(87) Numéro de publication internationale: WO 2006/095080

(56) Documents cités:
- US-A- 3 513 649
- US-B1- 6 810 652

## Description

La présente invention concerne un dispositif pour le remplissage d'un sac étanche par des éléments véhiculés par un flux généré par un équipement. Elle s'applique plus particulièrement, mais non exclusivement, aux appareils producteurs et/ou collecteurs de déchets végétaux tels que des tondeuses.

De façon générale, la collecte des déchets végétaux se fait dans des récipients, des bacs ou des sacs perméables puis ces déchets doivent être transvasés dans des sacs ou des poubelles qui seront pris en charge par les services d'ordures ménagères.

Or, il s'avère que ce transvasement est souvent malaisé, les bacs étant lourds et difficiles à manipuler.

Une solution consiste à utiliser directement lesdits sacs pris en charge par les services d'ordures ménagères. Mais, ces derniers sont le plus souvent étanches : l'air qui entre en mélange avec les déchets n'est pas évacué ce qui conduit à des sacs partiellement remplis de déchets.

On connait également le document US-6810652 qui décrit un récipient attaché de manière amovible à une tondeuse pour collecter de l'herbe, des feuilles et des déchets végétaux dans un sac de ramassage jetable.

L'invention a pour objet de résoudre ces inconvénients.

A cet effet, elle propose un dispositif pour le remplissage d'un sac par des éléments véhiculés par un flux généré par un équipement, ce dispositif comprenant une structure rigide, associée audit équipement, s'insérant dans le sac et supportant ledit sac étanche, ladite structure rigide permettant de compartimenter le volume interne dudit sac en un compartiment dédié au remplissage des éléments et en un compartiment dédié à l'évacuation de l'air véhiculant les éléments, le remplissage du sac contribuant à la formation des deux dits compartiments.

Ladite structure rigide comprend au moins deux panneaux comportant un côté commun et sensiblement perpendiculaires l'un à l'autre, à savoir un premier panneau d'entrée d'un flux air/éléments comportant une ouverture et sur lequel vient se fixer partiellement le sac de manière à former ledit volume de remplissage et un deuxième panneau de sortie d'un flux d'air s'insérant dans le sac comportant des orifices conformés de façon à permettre la sortie dudit flux d'air du volume de remplissage dans le volume d'évacuation du sac tout en empêchant le passage des éléments.

Le deuxième panneau en combinaison avec le sac permet de créer le volume de remplissage et le volume d'évacuation.

Bien entendu, le dispositif selon l'invention est particulièrement avantageux lors de l'utilisation d'un sac étanche à l'air mais l'utilisation d'un sac perméable à l'air est également envisageable.

Ladite structure pourra en outre comprendre au moins un volet orientant le flux air/éléments entrant dans le volume de remplissage de façon à optimiser le remplissage du sac.

Selon une première variante, ledit dispositif pourra comporter des moyens de battage externes du sac dans la partie avant du volume de remplissage de manière à améliorer le conditionnement des éléments tout en empêchant l'obturation de l'ouverture du panneau d'entrée du flux air/éléments.

Lesdits moyens de battage pourront, par exemple, être constitués d'une lame flexible avec une butée à chacune de ses extrémités et d'actionneurs.

Ces actionneurs pourront comprendre les roues de l'équipement.

Ils pourront également être actionnés par l'inclinaison de l'équipement lors de virages ou encore manuellement par une action sur une pédale ou à la main. Selon une deuxième variante, ledit dispositif pourra comprendre des moyens de battage de tout ou partie d'un conduit ayant pour fonction d'amener le flux air/éléments dans le sac. Ainsi, lesdits moyens de battage empêchent que le conduit s'obstrue en décollant puis en réinjectant les éléments dans le flux d'air.

Lesdits éléments pourront notamment être des déchets, des fruits, de la neige, du sable.

Ledit volume de remplissage pourra être fermé à l'aide de moyens de fixation du sac placés sur la structure.

Ledit premier panneau pourra être situé dans un plan sensiblement vertical.

Ledit deuxième panneau pourra être situé dans un plan sensiblement horizontal ou vertical.

Le deuxième panneau pourra être par exemple de forme rectangulaire, trapézoïdale, semi-circulaire ou semi-ovale.

Ledit au moins un volet pourra être fixé sur l'un ou les deux panneaux selon l'axe longitudinal et/ou transversal de la structure en formant un angle avec le panneau de façon à orienter le flux air/éléments vers le fond du volume de remplissage du sac, cet angle se réduisant au fur et à mesure du remplissage du sac.

Ledit au moins un volet pourra comporter des ouvertures de façon à améliorer la circulation du flux d'air.

Ledit au moins un volet pourra s'étendre de part et d'autre d'au moins un panneau de façon à présenter une partie à l'intérieur du volume de remplissage et une partie à l'extérieur du volume de remplissage.

Une telle conformation augmente la masse angulaire et ainsi l'inertie angulaire dudit au moins un volet en favorisant la diminution voire la suppression d'un mouvement de balancier dudit au moins un volet en cas de projection(s) sur ce dernier. En effet, ledit volet est un dispositif de protection contre les projectiles, puis, l'herbe, en remplissant le sac, se substitue au volet. Lorsque de multiples projectiles viennent taper ledit volet, l'angle avec le deuxième panneau se trouve réduit dans une mesure, qui peut en cas d'inertie angulaire trop faible au regard de l'énergie cinétique des projectiles, permettre un trajet desdits projectiles en ligne droite entre le conduit ayant pour fonction d'amener le flux air/éléments dans le sac et l'extérieur, à travers le sac, encourrant ainsi le risque de blesser un individu.

Par ailleurs, la partie dudit au moins un volet situé à l'extérieur du volume de remplissage du sac pourra être visible de l'utilisateur. Ainsi, lorsque le sac se remplit le volet tend vers une position horizontale et la partie extérieure dudit volet en prenant une telle position indique que le sac est plein.

Avantageusement, ledit au moins un volet pourra comprendre une fonction de protection et permettre de modifier la trajectoire rectiligne d'éléments susceptibles de transpercer le sac.

Dans sa fonction de protection, le volet pourra être remplacé par un filet extérieur à mailles serrées.

Un panneau de protection pourra également être positionné sous le sac afin de le protéger des déchirures.

Selon une troisième variante, le dispositif pourra comporter des panneaux complémentaires ou latéraux s'étendant perpendiculairement aux premier et deuxième panneaux et présentant un côté commun avec chacun desdits premier et deuxième panneaux, ces panneaux permettant de renforcer ladite structure.

Lesdits panneaux complémentaires pourront comprendre au moins un volet orientant le flux air/éléments.

Lesdits panneaux complémentaires pourront avoir une forme biseautée.

Chaque panneau complémentaire pourra comporter un deuxième panneau parallèle comprenant des moyens de fixation du sac de façon à former un V ou un U dont le sommet se situe du côté du volume d'évacuation de façon à former des canaux d'évacuation du flux d'air en facilitant la fixation du sac sur la structure et/ou l'équipement et en contribuant à son étanchéité en jouant sur l'élasticité de ces deux panneaux.

Lesdits canaux d'évacuation du flux d'air pourront comporter des orifices d'évacuation du flux.

Les moyens de fixation du sac sur la structure pourront comprendre un rebord situé à la périphérie du panneau d'entrée du flux air/éléments sur lequel vient s'appliquer le bord du sac puis éventuellement un lien élastique ou un dispositif pour pincer le bord du sac sur ledit rebord.

Le dispositif selon l'invention pourra comprendre des moyens pour guider le flux d'air sortant du volume d'évacuation vers le sol afin d'éviter une projection des particules encore présentes dans ledit flux d'air.

Le dispositif selon l'invention pourra comprendre des moyens pour guider le flux d'air sortant du volume d'évacuation de façon à ce que ledit flux soit aspiré, recyclé dans la chambre de coupe d'un équipement tel qu'une tondeuse.

Avantageusement, lesdits moyens pour guider permettent d'éviter la pollution du milieu environnant avec le résidu non filtré notamment la dispersion des graminées que se soit pour leur non prolifération ou les risques liés à la santé, allergène par exemple.

Lesdits moyens de fixation du sac pourront comprendre au moins un crochet.

Selon une variante, lesdits moyens de fixation du sac pourront se situer sur lesdits panneaux complémentaires.

Avantageusement, ledit pincement du bord du sac pourra être réalisé lors du montage du dispositif sur un équipement.

Le montage du dispositif selon l'invention sur un équipement pourra être réalisé par des moyens correspondant aux normes en vigueur pour ledit équipement.

Par exemple, ledit dispositif pourra comprendre des moyens pour adopter deux types de position par rapport à un équipement sur lequel il est monté : une position d'utilisation, ledit deuxième panneau étant dans un plan horizontal et une position à la fois de rangement et permettant la mise en place d'un sac sur le dispositif, ledit deuxième panneau étant alors de nouveau dans un plan sensiblement horizontal après une rotation approximative de + ou -180°, c'est-à-dire il se trouve retourné par rapport à sa position d'utilisation, l'angle exact de rotation dépendant de la forme du moteur servant de butée.

Avantageusement, la position de rangement permet de diminuer l'encombrement au sol.

Le passage d'une position à l'autre, par exemple, par rotation autour d'un axe horizontal permettant de connecter ledit équipement au dispositif selon l'invention pourra être facilité par le fait que le dispositif consiste en un ensemble solidaire.

Le dispositif selon l'invention pourra comprendre en outre un panneau de protection se positionnant sous un sac afin de le protéger des déchirures.

Lorsque ledit dispositif est placé en position de rangement, le panneau de protection pourra pivoter selon un axe horizontal pour venir fermer un conduit qui amène le flux air/éléments sortant d'une chambre de coupe dans ledit dispositif afin de protéger l'accès aux lames de la chambre de coupe et ainsi permettre un retournement en toute sécurité en position de rangement.

Ledit équipement pourra être notamment une tondeuse, une débroussailleuse, une faucheuse, un scarificateur, un broyeur, un aspirateur, un collecteur de fruits.

Des modes d'exécution de l'invention seront décrits ci-après, à titre d'exemples non limitatifs, avec référence aux dessins annexés dans lesquels :
Les figures 1a et 1b sont des représentations respectivement de face et de côté d'un mode de réalisation du dispositif selon l'invention ;
La figure 2 est une représentation d'une tondeuse équipée d'un dispositif selon l'invention comportant des moyens de battage.
La figure 3 est une représentation en perspective d'un deuxième mode de réalisation du dispositif selon l'invention comportant des panneaux supplémentaires ;
La figure 4 est une représentation d'une variante de la figure 3 montrant des volets ;
La figure 5 est une représentation d'un troisième mode de réalisation du dispositif selon l'invention ;
La figure 6 est une représentation d'un crochet de la figure 5 ;
Les figures 7a, 7b, 7c sont des représentations du fonctionnement des moyens externes de battage d'un sac ;
La figure 8 est une représentation d'un quatrième mode de réalisation du dispositif selon l'invention ;
La figure 9 est une coupe selon un plan longitudinal d'un cinquième mode de réalisation du dispositif selon l'invention avec un volet sur le panneau d'entrée du flux air/éléments;
Les figures 10a et 10b sont des représentations de face et de côté d'un sixième mode de réalisation du dispositif selon l'invention avec plusieurs volets sur le panneau d'entrée du flux air/éléments ;
La figure 11 est une représentation d'un septième mode de réalisation du dispositif selon l'invention ;
La figure 12 est une représentation de côté d'une tondeuse équipée d'une variante du dispositif de la figure 3 ;
La figure 13 est une représentation de côté d'une tondeuse autoportée équipée d'un dispositif selon l'invention comportant des moyens de battage.

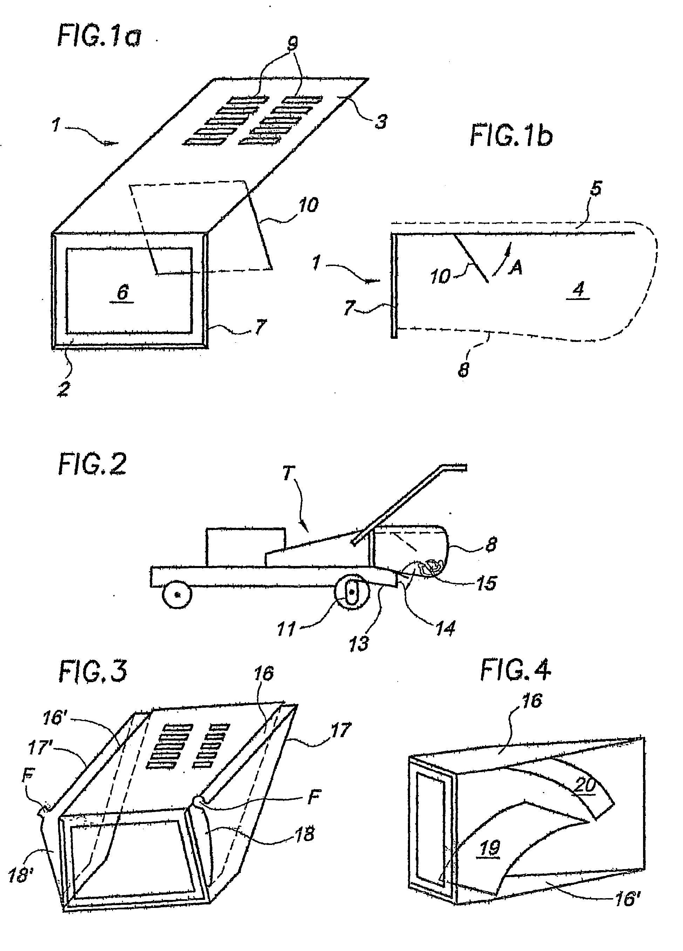

Dans l'exemple des figures 1 a et 1b, le dispositif selon l'invention comporte une structure 1 comprenant deux panneaux de forme rectangulaire perpendiculaires l'un à l'autre, un panneau d'entrée d'un flux air/éléments 2 situé dans un plan sensiblement vertical, un panneau de sortie d'un flux d'air 3 situé dans un plan sensiblement horizontal, un des côtés longitudinaux du panneau 2 étant commun à un des côtés transversaux du panneau 3.

Le dispositif selon l'invention comprend ainsi un volume de remplissage 4 délimité d'une part par les panneaux 2 et 3 et d'autre part par les parois du sac et un volume d'évacuation du flux d'air 5 délimité par le panneau 3 et les parois du sac.

Le panneau 2 présente une ouverture 6 pour permettre l'entrée du flux air/éléments.

Il comporte également sur ses trois côtés non communs au panneau 3 des moyens de fixation d'un sac de collecte 8 d'éléments comprenant un rebord saillant 7.

Il est à noter que le rebord pourra être non saillant et, plus généralement, lesdits moyens de fixation pourront être sur au moins un des côtés.

Le sac pourra être conçu dans une matière recyclable ou en une matière présentant une certaine souplesse et/ou élasticité.

Le panneau 3 comporte dans sa partie opposée (la plus éloignée du) au panneau 2 des orifices 9 destinés à l'évacuation de l'air entré dans le sac 8 avec le flux air/éléments.

Ces orifices pourront par exemple consister en un grillage intégré au panneau ou en des perçages directs du panneau.

Il est à noter que le panneau 3 a également un rôle dans le maintien du sac en position d'utilisation.

De plus, il sépare les volumes de remplissage et d'évacuation et le remplissage du sac contribue à l'étanchéité entre lesdits volumes, le sac sous l'effet du poids des éléments vient au contact des bords du panneau 3.

En outre, ses angles pourront être prévus par exemple arrondis afin de ne pas déchirer le sac ou sa forme pourra avoir tout autre forme compatible avec l'insertion dans le sac telle que trapézoïdale, semi-circulaire ou semi-ovale.

Un volet 10 de forme rectangulaire avec un côté fixé au niveau de la partie avant du panneau 3 et le côté opposé libre orienté vers l'arrière du panneau 3, le volet 10 et le panneau 3 formant un angle maximum de 90°. Ce volet oriente le flux air/éléments et modifie la trajectoire d'éléments susceptibles de transpercer le sac tout en absorbant l'énergie cinétique desdits éléments. L'angle formé par le volet 10 avec le panneau 3 se réduit au fur et à mesure du remplissage dudit sac selon la flèche A représentée sur la figure 1b, l'absorption de l'énergie cinétique étant alors réalisée par les éléments amassés.

Le volet pourra avoir une forme différente dans la mesure où sa fonction est réalisée.

Le dispositif comprend également des moyens de battage externe comportant deux cames 11 montées chacune sur une des roues arrière 12 d'un équipement par exemple une tondeuse T (Figure 2). Chaque came 11 entraîne un axe sensiblement horizontal 13 terminé par un axe vertical 14 sur lequel est articulé l'extrémité d'une lame flexible 15 reliant les deux axes verticaux 14, les dimensions de ces axes permettant de placer la lame flexible 15 sous la partie avant du sac 8.

Le dispositif ainsi décrit est fixé à l'arrière de la tondeuse T, selon des normes établies par le fabricant, au niveau du panneau 2 de sorte que l'ouverture 6 se trouve vis-à-vis de la sortie des déchets végétaux de la tondeuse. Ainsi, le flux air/déchets s'engouffre dans l'ouverture avant d'être orienté vers la partie arrière du sac par le volet 10 : le flux va se heurter aux parois du sac au niveau de la partie arrière entraînant le dépôt des déchets puis l'évacuation de l'air par les orifices 9.

Dans le même temps, la tondeuse roulant, la lame flexible 15 vient battre le sac 8 au niveau de sa partie avant de façon à permettre l'introduction d'une plus grande quantité de déchets et à empêcher l'obturation de l'ouverture 6.

La figure 3 illustre un mode réalisation du dispositif selon l'invention où la structure 1 comprend outre les panneaux d'entrée 2 et de sortie 3, des panneaux complémentaires biseautés 16, 16' situés dans des plans sensiblement verticaux perpendiculaires au panneau d'entrée 2 et au panneau de sortie 3 de façon à renforcer ladite structure 1.

Chaque panneau complémentaire 16, 16' comporte un deuxième panneau parallèle 17, 17', comprenant des moyens F de fixation du sac, de façon à former un V dont le sommet se situe du côté du volume d'évacuation de façon à former des canaux 18, 18' d'évacuation du flux d'air, lesdits canaux 18, 18' et le volume d'évacuation du flux d'air 5 formant un unique canal d'évacuation dudit flux.

Il est à noter que les moyens de fixation F pourront se situer sur le panneau d'entrée 2 par exemple aux extrémités de son côté supérieure.

Avantageusement, les panneaux 17, 17' de la figure 3 vont favoriser le maintien en position du sac.

En effet, la relative élasticité due à leur forme engendre un maintien du sac pouvant être accru par un pincement du sac entre le moyeu du côté intérieur des roues et lesdits panneaux 17, 17' ou un enroulement du sac sur les panneaux 17, 17' ou encore un poinçonnage du sac par des pièces en saillie de diverses formes situées sur lesdits panneaux.

La figure 4 est une représentation d'une variante de la figure 3 avec seulement comme panneaux complémentaires les panneaux 16, 16' et illustrant l'utilisation de deux volets flexibles 19, 20 chacun étant situé sur un des panneaux complémentaires, le premier 19 étant orienté selon l'axe longitudinal de la structure 1, le second 20 étant orienté selon l'axe transversal de la structure 1.

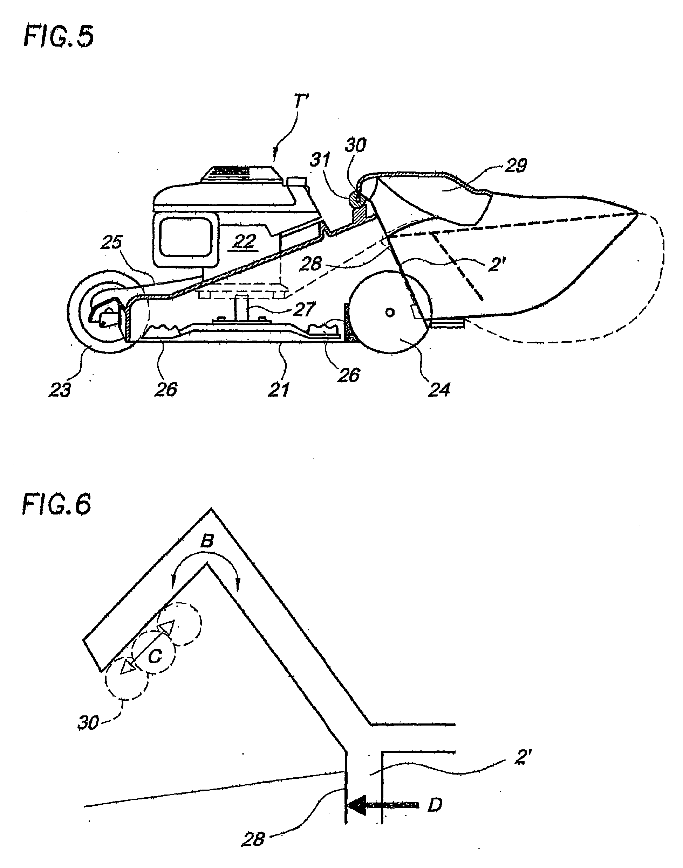

La figure 5 illustre une variante du dispositif selon l'invention où une tondeuse T' intègre ledit dispositif.

Cette tondeuse comporte un châssis porteur 21 muni d'un moteur d'entraînement 22, de deux roues avant 23, deux roues arrière 24 éventuellement motrices et d'un carter de coupe central 25 dans lequel sont montées au moins deux lames rotatives 26 autour d'un axe 27 sensiblement perpendiculaire au sol. Ces deux lames génèrent un flux d'air et de déchets qui est évacué radialement sous l'effet d'une force centrifuge en direction d'un orifice de sortie 28 sur lequel est monté directement le dispositif selon l'invention. Il est à noter que le dispositif pourra être monté indirectement sur ledit orifice 28.

Cette tondeuse T' comprend également un capot de protection 29 au dessus de l'orifice de sortie 28 du flux air/déchets de la tondeuse T'.

Ce capot assure la protection de l'utilisateur lorsque le dispositif et le sac ne sont pas en place : si nécessaire, il absorbe l'énergie cinétique des projectiles tout en les déviant vers le sol.

Ce capot est articulé sur un axe 30 perpendiculaire à l'axe longitudinal de la tondeuse. Lorsqu'il tourne, il est contraint par un ressort, non représenté, situé sur l'axe 30 qui tend à le ramener en position rabattue en exerçant un effort sur le dispositif de manière à pincer le bord du sac sur la tondeuse. Cette position du capot par rapport au dispositif favorise l'étanchéité des compartiments d'évacuation et de remplissage lorsque le sac n'a pas commencé à être rempli.

Les moyens de fixation du dispositif selon l'invention comprennent deux crochets 31 situés à chaque extrémité du bord supérieur du panneau d'entrée 2' du flux air/déchets (Figure 6).

Ces crochets viennent s'accrocher sur l'axe 30 du capot de protection. La liaison crochets/axe laisse aux crochets un certain degré de liberté de rotation autour de l'axe (flèche B) et de translation selon les flèches C de façon à favoriser le déplacement parallèle du panneau d'entrée 2' en appui sur l'orifice 28 de sortie du flux air/déchets de la tondeuse de manière à assurer un contact et plus précisément un pincement (flèche D) du bord du sac situé entre le panneau 2' et la tondeuse.

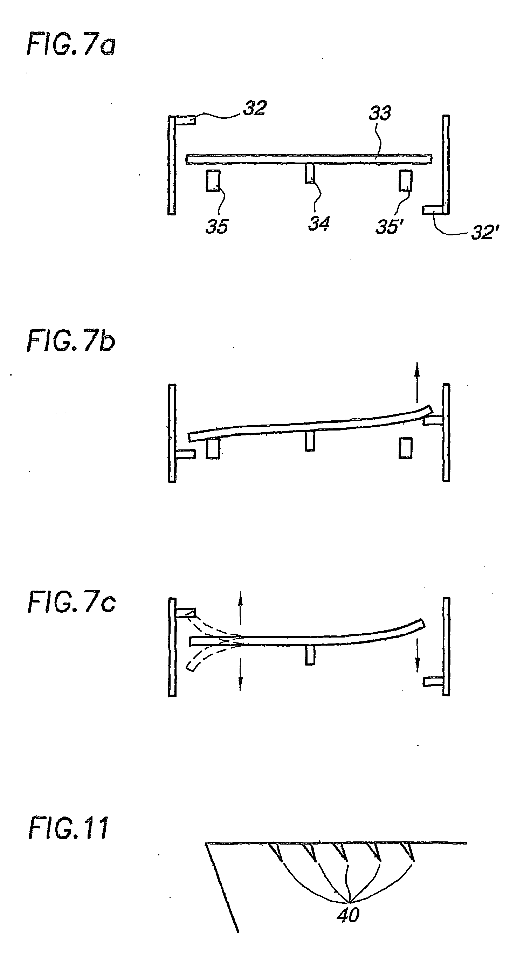

Un autre moyen de battage externe du sac pourra comprendre (Figures 7a-c) :
- sur chaque roue arrière une protubérance parallèle à l'axe de roulement de la roue et formant un excentrique 32, 32', la position de chaque excentrique étant décalée l'une par rapport à l'autre par exemple de 180°,
- une lame 33 solidaire en son centre d'un pivot 34 éventuellement rattaché au bord inférieur du panneau d'entrée du flux air/éléments, située dans un plan horizontal à hauteur de l'axe des roues,
- deux butées 35, 35' chacune étant située à l'une des extrémités du bord inférieur du panneau d'entrée du flux air/éléments.

Le fonctionnement du moyen de battage est une succession de cycles, chaque cycle se déroulant de la façon suivante : l'énergie emmagasinée durant chaque flexion au niveau d'un côté de la lame est transmise à l'autre côté de la lame lorsque celle-ci est libérée effectuant ainsi un battage du sac au niveau de sa partie inférieure avant afin de déplacer les éléments vers la partie arrière du sac.

L'invention ne se limite pas aux exemples précédemment décrits. En effet, le panneau de sortie du flux d'air pourra avoir différentes positions par rapport au panneau d'entrée du flux air/éléments.

En outre, un ou plusieurs volets flexibles et/ou non flexibles pourront être situés sur le panneau d'entrée du flux air/éléments.

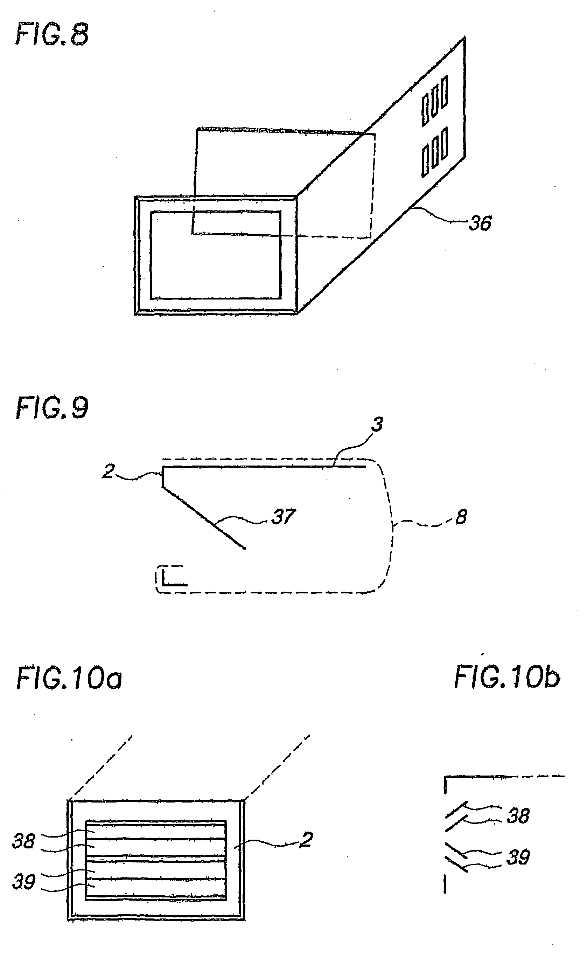

La figure 8 illustre un mode de réalisation du dispositif selon l'invention où le panneau de sortie 36 du flux d'air est situé dans un plan sensiblement vertical perpendiculaire au panneau d'entrée 2.

La figure 9 illustre un mode de réalisation du dispositif selon l'invention vue en coupe selon un plan longitudinale où le volet 37 orientant le flux air/éléments est situé sur le panneau d'entrée 2.

Les figures 10a et 10b illustrent un mode de réalisation du dispositif selon l'invention où le panneau d'entrée 2 comporte plusieurs volets, les volets 38 situés dans la partie supérieure du panneau 2 étant orientés vers l'intérieur du sac et vers le haut, les volets 39 situés dans la partie inférieure du panneau 2 étant orientés vers l'intérieur du sac et vers le bas.

La figure 11 illustre un mode de réalisation du dispositif selon l'invention où les volets sont des lames 40 très courtes s'étendant selon un axe transversal au dispositif.

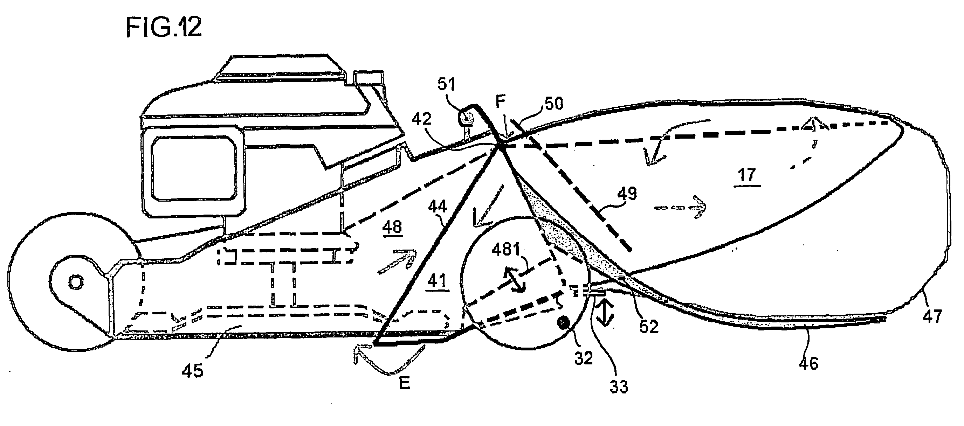

La figure 12 représente une variante du dispositif de la figure 3 dans laquelle les panneaux 17, 17' sont respectivement prolongés par des panneaux déflecteurs 41, 41' reliés au moins au niveau de leur partie supérieure 42 par exemple par un panneau non visible sur la figure, de façon à former un conduit 44 qui canalise le flux d'air sortant et les particules qu'il contient vers le sol (le panneau 17' et le déflecteur 41'correspondant ne sont pas visible sur la figure 12).

Plus précisément, dans cette variante, le flux d'air est canalisé vers l'entrée (flèche E) de la chambre de coupe 45 où il est aspiré.

Il est à noter que chaque panneau 41, 41' peut constituer un élément du dispositif selon l'invention proprement dit c'est-à-dire un seul panneau avec un panneau 17, 17' ou encore constituer un élément de l'équipement sur lequel est monté le dispositif selon l'invention.

Ledit dispositif comprend également un panneau de protection 46 se positionnant sous un sac 47 afin de le protéger des déchirures.

Le dispositif comprend encore des moyens de battage tels que décrits sur les figures 7a à 7c. De plus, au moins les protubérances 32, 32' situées sur les roues viennent actionner un batteur composé au minimum de la partie inférieure 481 d'un conduit 48 amenant le flux air/éléments de la chambre de coupe 45 dans le dispositif selon l'invention afin de favoriser le déplacement des éléments du flux air/éléments vers le volume de remplissage.

Enfin, ledit dispositif comprend un volet 49 qui s'étend à travers le panneau 3 et le sac 47 de façon à ce que sa partie 50, située alors à l'extérieur du volume de remplissage et du sac, soit visible par l'utilisateur.

Une telle conformation de volet présente deux avantages :
- une stabilisation du volet lors de projections,
- une indication du remplissage du sac, lorsque le sac se remplit, le volet tend selon la flèche F vers une position horizontale ; ainsi, la tonte est arrêtée avant que le conduit 48 ne se soit également rempli et que l'utilisateur ne doive mettre les mains dans ledit conduit 48 afin de le vider au risque de se couper.

Ledit dispositif pourra présenter deux types de position : une position d'utilisation, le panneau 3 étant dans un plan horizontal et une position, non représentée, à la fois de rangement et permettant la mise en place d'un sac sur le dispositif, ledit panneau 3 étant alors retourné après une rotation de 180°.

Le passage d'une position à l'autre se fait, par exemple, par rotation du dispositif selon l'invention autour d'un axe horizontal 51.

Il est à noter que, lorsque le dispositif est placé en position de rangement, le panneau de protection 46 pivote selon un axe horizontal 52 pour venir fermer le conduit 48 qui amène le flux air/éléments sortant de la chambre de coupe 45 dans le dispositif afin de protéger l'accès aux lames de la chambre de coupe 45 et ainsi permettre un retournement en toute sécurité en position de rangement.

Bien entendu, l'axe 52 n'est pas nécessaire en cas de système fixe.

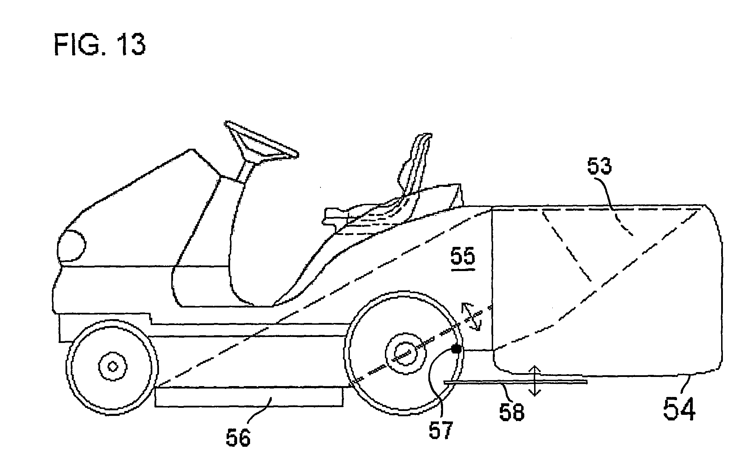

La figure 13 représente une tondeuse autoportée équipée d'un dispositif selon l'invention 53.

Ce dispositif comprend en outre des moyens de battage externe d'un sac 54 et d'un conduit 55 amenant le flux air/éléments sortant de la chambre de coupe 56 dans le dispositif selon l'invention.

Ces moyens de battage comportent notamment des protubérances 57 et une lame 58 respectivement analogues aux protubérances 32 et à la lame 33 de l'exemple des figures 7a à 7c et ils comportent en outre un batteur analogue à celui de la figure 12 c'est-à-dire composé d'une partie du conduit 55.

Parmi les nombreux avantages que présente le dispositif précédemment décrit, on retiendra les suivants :
- un remplissage optimal du sac,
- une sécurité par rapport à d'éventuels projectiles,
- une facilité d'adaptation sur un équipement,
- une facilité d'intégration dans un équipement,
- en raison de l'absence de transfert d'éléments, un gain de temps, moins de dispersion de spores et de graminées (allergènes), une préservation du dos notamment,
- un gain de place pour le rangement,
- une utilisation de matériaux recyclables.

## Revendications

1. Dispositif pour le remplissage d'un sac par des éléments véhiculés par un flux généré par un équipement, ce dispositif comprenant une structure rigide (1), associée audit équipement (T), s'insérant dans le sac et supportant ledit sac (8), ladite structure rigide (1) permettant de compartimenter le volume interne dudit sac en un compartiment (4) dédié au remplissage des éléments et en un compartiment (5) dédié à l'évacuation de l'air véhiculant les éléments,
**caractérisé en ce que** ladite structure rigide (1) comprend au moins deux panneaux comportant un côté commun et sensiblement perpendiculaires l'un à l'autre, à savoir un premier panneau (2) d'entrée d'un flux air/éléments comportant une ouverture (6) et sur lequel vient se fixer partiellement le sac (8) de manière à former ledit volume de remplissage (4) et un deuxième panneau (3, 21) de sortie d'un flux d'air s'insérant dans le sac (8) comportant des orifices (9) conformés de façon à permettre la sortie dudit flux d'air du volume de remplissage (4) dans le volume d'évacuation (5) du sac tout en empêchant le passage des éléments.

2. Dispositif selon la revendication 1,
**caractérisé en ce que** le sac (8) est étanche à l'air.

3. Dispositif selon la revendication 1,
**caractérisé en ce qu'**il comporte au moins un volet (10, 19, 20, 37, 38, 39) orientant le flux air/éléments entrant dans le volume de remplissage (4) de façon à optimiser le remplissage du sac étanche (8).

4. Dispositif selon la revendication 3,
**caractérisé en ce que** ledit au moins un volet (49) s'étend de part et d'autre d'au moins un panneau (3) de façon à présenter une partie à l'intérieur du volume de remplissage et une partie (50) à l'extérieur du volume de remplissage.

5. Dispositif selon la revendication 1,
**caractérisé en ce qu'**il comporte des moyens de battage externe (11, 12, 13, 14, 15) du sac.

6. Dispositif selon la revendication 1,
**caractérisé en ce qu'**il comporte des moyens de battage (32, 33, 481, 57, 58) de tout ou partie d'un conduit (48, 55) ayant pour fonction d'amener le flux air/éléments dans le sac.

7. Dispositif selon la revendication 1,
**caractérisé en ce que** ledit premier panneau (2) d'entrée d'un flux air/éléments est situé dans un plan sensiblement vertical.

8. Dispositif selon la revendication 1,
**caractérisé en ce que** ledit deuxième panneau (3, 36) de sortie d'un flux d'air est situé dans un plan sensiblement horizontal ou vertical.

9. Dispositif selon la revendication 1,
**caractérisé en ce que** ledit au moins un volet (10, 19, 20, 37, 38, 39) est fixé sur l'un ou les deux panneaux (2, 3, 36) selon l'axe longitudinal et/ou transversal de la structure (1) en formant un angle avec le panneau de façon à orienter le flux air/éléments vers le fond du sac, cet angle se réduisant au fur et à mesure du remplissage du sac.

10. Dispositif selon la revendication 1,
**caractérisé en ce qu'**il comporte des panneaux complémentaires (16, 16') s'étendant perpendiculairement aux premier (2) et deuxième (3, 36) panneaux et présentant un côté commun avec chacun desdits premier et deuxième panneaux.

11. Dispositif selon la revendication 10,
**caractérisé en ce que** lesdits panneaux complémentaires (16, 16') comprennent au moins un volet (19, 20) orientant le flux air/éléments.

12. Dispositif selon la revendication 10,
**caractérisé en ce que** chaque panneau complémentaire (16, 16') comporte un deuxième panneau parallèle (17,17') de façon à former un V ou un U dont le sommet se situe du côté du volume d'évacuation (5) de façon à former des canaux (18, 18') d'évacuation de l'air.

13. Dispositif selon la revendication 1,
**caractérisé en ce que** les moyens de fixation du sac sur la structure comprennent un rebord (7) situé à la périphérie du panneau (2) d'entrée du flux air/éléments sur lequel vient s'appliquer le bord du sac.

14. Dispositif selon la revendication 1,
**caractérisé en ce que** ledit panneau (2) d'entrée du flux air/éléments comporte plusieurs volets, les volets (38) situés dans la partie supérieure dudit panneau étant orientés vers l'intérieur du sac et vers le haut, les volets (39) situés dans la partie inférieure dudit panneau étant orientés vers l'intérieur du sac et vers le bas.

15. Dispositif selon la revendication 1,
**caractérisé en ce que** lesdits éléments sont des déchets végétaux ou des fruits ou de la neige ou du sable.

16. Dispositif selon la revendication 1,
**caractérisé en ce qu'**il comprend des moyens (41) pour guider le flux d'air sortant du volume d'évacuation vers le sol afin d'éviter une projection des particules encore présentes dans ledit flux d'air ou la pollution du milieu environnant avec le résidu non filtré.

17. Dispositif selon la revendication 1,
**caractérisé en ce qu'**il comprend des moyens (41) pour guider le flux d'air sortant du volume d'évacuation de façon à ce que ledit flux soit aspiré, recyclé dans la chambre de coupe (45) d'un équipement.

18. Dispositif selon la revendication 1,
**caractérisé en ce qu'**il comprend des moyens (51) pour adopter deux types de position par rapport à un équipement sur lequel il est monté : une position d'utilisation, ledit deuxième panneau étant dans un plan horizontal et une position à la fois de rangement et permettant la mise en place d'un sac sur le dispositif, ledit deuxième panneau étant alors de nouveau dans un plan sensiblement horizontal après une rotation approximative de + ou -180°, c'est-à-dire il se trouve retourné par rapport à sa position d'utilisation, l'angle exact de rotation dépendant de la forme du moteur servant de butée.

19. Dispositif selon la revendication 1,
**caractérisé en ce qu'**il comprend en outre un panneau de protection (46) se positionnant sous un sac (47) afin de le protéger des déchirures.

20. Dispositif selon l'une des revendications 18 et 19,
**caractérisé en ce que**, lorsque ledit dispositif est placé en position de rangement, le panneau de protection (46) pivote selon un axe horizontal (52) pour venir fermer un conduit (48) qui amène le flux air/éléments sortant d'une chambre de coupe (45) dans ledit dispositif afin de protéger l'accès aux lames de la chambre de coupe (45) et ainsi permettre un retournement en toute sécurité en position de rangement.

21. Dispositif selon la revendication 1,
**caractérisé en ce que** ledit équipement est une tondeuse ou une débroussailleuse ou une faucheuse ou un scarificateur ou un broyeur ou un aspirateur ou un collecteur de fruits.

22. Tondeuse comportant un châssis porteur (21) muni d'un moteur d'entraînement (22), de deux roues avant (23), deux roues arrière (24) et d'un carter (25) de coupe central dans lequel sont montées au moins deux lames rotatives autour d'un axe (27) sensiblement perpendiculaire au sol, lesdites au moins deux lames générant un flux d'air et de déchets qui est évacué radialement sous l'effet d'une force centrifuge en direction d'un orifice de sortie (28),
**caractérisée en ce qu'**elle comprend, en outre, un dispositif pour le remplissage d'un sac par des déchets végétaux véhiculés par un flux généré par la tondeuse comprenant une structure rigide (1), associée audit équipement (T), s'insérant dans le sac et supportant ledit sac (8), ladite structure rigide (1) permettant de compartimenter le volume interne dudit sac en un compartiment (4) dédié au remplissage des déchets végétaux et en un compartiment (5) dédié à l'évacuation de l'air véhiculant les déchets végétaux, ce dispositif étant monté proche de l'orifice de sortie (28), ladite structure rigide (1) comprenant au moins deux panneaux comportant un côté commun et sensiblement perpendiculaires l'un à l'autre, à savoir un premier panneau (2) d'entrée d'un flux air/éléments comportant une ouverture (6) et sur lequel vient se fixer partiellement le sac (8) de manière à former ledit volume de remplissage (4) et un deuxième panneau (3, 21) de sortie d'un flux d'air s'insérant dans le sac (8) comportant des orifices (9) conformés de façon à permettre la sortie dudit flux d'air du volume de remplissage (4) dans le volume d'évacuation (5) du sac tout en empêchant le passage des éléments.

## Claims

1. Device for filling a bag by means of elements which are conveyed by a flow produced by a piece of equipment, the device comprising a rigid structure (1) which is associated with the piece of equipment (T) and which is inserted into the bag and supports the bag (8), the rigid structure (1) allowing the internal space of the bag to be partitioned into a compartment (4) which is dedicated to filling the elements and a compartment (5) which is dedicated to discharging the air which conveys the elements, **characterised in that** the rigid structure (1) comprises at least two panels which comprise a common side and which are substantially perpendicular to each other, that is to say, a first inlet panel (2) which is for an air/elements flow and which comprises an opening (6) and to which there is partially fixed the bag (8) so as to form the filling space (4) and a second outlet panel (3, 21) which is for a flow of air and which is inserted into the bag (8) and which comprises openings (9) which are shaped so as to allow the discharge of the flow of air from the filling space (4) into the discharge space (5) of the bag whilst preventing the passage of the elements.

2. Device according to claim 1,
**characterised in that** the bag (8) is air-tight.

3. Device according to claim 1,
**characterised in that** it comprises at least one flap (10, 19, 20, 37, 38, 39) which orientates the air/elements flow which is introduced into the filling space (4) so as to optimise the filling of the air-tight bag (8).

4. Device according to claim 3,
**characterised in that** the at least one flap (49) extends at one side and the other of at least one panel (3) so as to have a portion inside the filling space and a portion (50) outside the filling space.

5. Device according to claim 1,
**characterised in that** it comprises means (11, 12, 13, 14, 15) for externally agitating the bag.

6. Device according to claim 1,
**characterised in that** it comprises agitation means (32, 33, 481, 57, 58) for the whole or a portion of a conduit (48, 55) which serves to convey the air/elements flow into the bag.

7. Device according to claim 1,
**characterised in that** the first inlet panel (2) for an air/elements flow is located in a substantially vertical plane.

8. Device according to claim 1,
**characterised in that** the second outlet panel (3, 36) for a flow of air is located in a substantially horizontal or vertical plane.

9. Device according to claim 1,
**characterised in that** the at least one flap (10, 19, 20, 37, 38, 39) is fixed to one or both panels (2, 3, 36) in accordance with the longitudinal and/or transverse axis of the structure (1), with an angle being formed with the panel so as to orientate the air/elements flow towards the bottom of the bag, that angle decreasing as the bag becomes increasingly full.

10. Device according to claim 1,
**characterised in that** it comprises complementary panels (16, 16') which extend perpendicularly relative to the first panels (2) and second panels (3, 36) and which have a common side with respect to each of the first and second panels.

11. Device according to claim 10,
**characterised in that** the complementary panels (16, 16') comprise at least one flap (19, 20) which orientates the air/elements flow.

12. Device according to claim 10,
**characterised in that** each complementary panel (16, 16') comprises a second parallel panel (17, 17') so as to form a V or a U, the top of which is located at the side of the discharge space (5) so as to form channels (18, 18') for discharging air.

13. Device according to claim 1,
**characterised in that** the means for fixing the bag to the structure comprise a rim (7) which is located at the periphery of the inlet panel (2) for the air/elements flow and to which the edge of the bag is applied.

14. Device according to claim 1,
**characterised in that** the inlet panel (2) for the air/elements flow comprises a plurality of flaps, the flaps (38) which are located in the upper portion of the panel being orientated towards the interior of the bag and upwards, the flaps (39) which are located in the lower portion of the panel being orientated towards the interior of the bag and downwards.

15. Device according to claim 1,
**characterised in that** the elements are plant waste, fruit, snow or sand.

16. Device according to claim 1,
**characterised in that** it comprises means (41) for guiding the air flow being discharged from the evacuation space towards the ground in order to prevent projection of the particles which are still present in the air flow or pollution of the environment with the unfiltered residue.

17. Device according to claim 1,
**characterised in that** it comprises means (41) for guiding the air flow being discharged from the discharge space in order for the flow to be drawn in, recycled in the cutting chamber (45) of a piece of equipment.

18. Device according to claim 1,
**characterised in that** it comprises means (51) for taking up two types of position in relation to a piece of equipment, on which it is mounted: a position for use, the second panel being in a horizontal plane and a position both for storage and allowing a bag to be positioned on the device, the second panel again being in a substantially horizontal plane after an approximate rotation of +/- 180°, that is to say, it is transposed relative to its position for use, the precise angle of rotation depending on the shape of the motor which acts as a stop.

19. Device according to claim 1,
**characterised in that** it further comprises a protection panel (46) which is positioned below a bag (47) in order to protect it from becoming torn.

20. Device according to either claim 18 or claim 19, **characterised in that**, when the device is positioned in a storage position, the protection panel (46) pivots in accordance with a horizontal axis (52) in order to close a conduit (48) which conveys the air/elements flow which is being discharged from a cutting chamber (45) into the device in order to protect access to the blades of the cutting chamber (45) and thereby to allow a return to a storage position in complete safety.

21. Device according to claim 1,
**characterised in that** the piece of equipment is a lawnmower, a bush-cutter, a rotary mower, a scarifier, a shredder, a suction machine or a fruit collector.

22. Lawnmower comprising a carrier frame (21) which is provided with a drive motor (22), two front wheels (23), two rear wheels (24) and a central cutting casing (25), in which there are mounted at least two blades which rotate about an axis (27) which is substantially perpendicular to the ground, the at least two blades producing a flow of air and waste which is discharged radially under the effect of a centrifugal force in the direction of a discharge opening (28),
**characterised in that** it further comprises a device for filling a bag with plant waste which is conveyed by a flow produced by the lawnmower, comprising a rigid structure (1) which is associated with the piece of equipment (T) and which is inserted into the bag and supports the bag (8), the rigid structure (1) allowing the internal space of the bag to be partitioned into a compartment (4) which is dedicated to being filled with plant waste and a compartment (5) which is dedicated to the discharge of the air which conveys the plant waste, that device being mounted near the outlet opening (28), the rigid structure (1) comprising at least two panels which comprise a common side and which are substantially perpendicular relative to each other, that is to say, a first inlet panel (2) which is for an air/elements flow and which comprises an opening (6) and to which there is partially fixed the bag (8) so as to form the filling space (4) and a second outlet panel (3, 21) for an air flow which is inserted into the bag (8) and which comprises openings (9) which are shaped so as to allow the air flow to be discharged from the filling space (4) into the discharge space (5) of the bag whilst preventing the passage of the elements.

## Patentansprüche

1. Vorrichtung zum Füllen eines Sackes mit Elementen, die von einem durch eine Einrichtung erzeugten Strom mitgeführt werden, wobei diese Vorrichtung einen dieser Einrichtung (T) zugeordneten steifen Aufbau (1) aufweist, der sich in den Sack (8) einfügt und diesen trägt, wobei der steife Aufbau (1) erlaubt, das innere Volumen des Sackes in ein Fach (4), das zur Füllung mit den Elementen bestimmt ist, und in ein Fach (5) einzuteilen, das zum Entleeren der die Elemente mitführenden Luft bestimmt ist,
**dadurch gekennzeichnet, dass** der steife Aufbau (1) mindestens zwei Platten aufweist, die eine gemeinsame Kante haben und im Wesentlichen senkrecht zueinander sind, nämlich eine erste Platte (2) für den Einlass eines Luft/Elemente-Stromes, die eine Öffnung (6) aufweist und auf der sich der Sack (8) teilweise so befestigt, dass er das Füllvolumen (4) bildet, und eine zweite Platte (3, 21) für den Auslass eines Luftstromes, die sich in den Sack (8) einfügt und derart geformte Öffnungen (9) aufweist, dass der Auslass des Luftstromes des Füllvolumens (4) in das Entleerungsvolumen (5) des Sackes erlaubt wird, wobei zugleich der Durchgang der Elemente verhindert wird.

2. Vorrichtung nach Anspruch 1,
**dadurch gekennzeichnet, dass** der Sack (8) gegenüber Luft dicht ist.

3. Vorrichtung nach Anspruch 1,
**dadurch gekennzeichnet, dass** sie mindestens eine Klappe (10, 19, 20, 37, 38, 39) aufweist, welche den Luft/Elemente-Strom, der in das Füllvolumen (4) eintritt, derart lenkt, dass die Füllung des dichten Sackes (8) optimiert wird.

4. Vorrichtung nach Anspruch 3,
**dadurch gekennzeichnet, dass** sich mindestens eine dieser Klappen (49) auf beiden Seiten mindestens einer Platte (3) derart erstreckt, dass sie einen Teil im Inneren des Füllvolumens und einen Teil (50) außerhalb des Füllvolumens aufweist.

5. Vorrichtung nach Anspruch 1,
**dadurch gekennzeichnet, dass** sie Anschlagmittel (11, 12, 13, 14, 15) außerhalb des Sackes aufweist.

6. Vorrichtung nach Anspruch 1,
**dadurch gekennzeichnet, dass** sie Anschlagmittel (32, 33, 481, 57, 58) ganz oder teilweise an einer Leitung (48, 55) mit der Funktion, den Luft/Elemente-Strom in den Sack zu bringen, aufweist.

7. Vorrichtung nach Anspruch 1,
**dadurch gekennzeichnet, dass** die erste Platte (2) für den Einlass eines Luft/Elemente-Stromes in einer im Wesentlichen vertikalen Ebene liegt.

8. Vorrichtung nach Anspruch 1,
**dadurch gekennzeichnet, dass** die zweite Platte (3, 36) für den Auslass eines Luftstromes in einer im Wesentlichen horizontalen oder vertikalen Ebene liegt.

9. Vorrichtung nach Anspruch 1,
**dadurch gekennzeichnet, dass** die mindestens eine Klappe (10, 19, 20, 37, 38, 39) an einer oder den beiden Platten (2, 3, 36) entlang einer Längs- und/oder Querachse des Aufbaus (1) befestigt ist, wobei sie mit der Platte einen Winkel derart bildet, dass der Luft/Elemente-Strom zum Boden des Sackes hin gelenkt wird, wobei sich dieser Winkel je nach der Füllung des Sackes verringert.

10. Vorrichtung nach Anspruch 1,
**dadurch gekennzeichnet, dass** sie komplementäre Platten (16, 16') aufweist, die sich senkrecht zu der ersten (2) und der zweiten Platte (3, 36) erstrecken und eine mit jeder der ersten und zweiten Platte gemeinsame Kante aufweisen.

11. Vorrichtung nach Anspruch 10,
**dadurch gekennzeichnet, dass** die komplementären Platten (16, 16') mindestens eine den Luft/Elemente-Strom lenkende Klappe (19, 20) aufweisen.

12. Vorrichtung nach Anspruch 10,
**dadurch gekennzeichnet, dass** jede komplementäre Platte (16, 16') eine zweite parallele Platte (17, 17') derart aufweist, dass ein V oder ein U gebildet wird, dessen Scheitel an der Seite des Entleerungsvolumens (5) so sitzt, dass Kanäle (18, 18') zur Luftentleerung gebildet werden.

13. Vorrichtung nach Anspruch 1,
**dadurch gekennzeichnet, dass** die Befestigungsmittel des Sackes an dem Aufbau einen Rand (7) aufweisen, der an dem Umfang der Einlassplatte (2) für den Luft/Elemente-Strom angeordnet ist, auf welchem sich die Krempe des Sackes aufbringt.

14. Vorrichtung nach Anspruch 1,
**dadurch gekennzeichnet, dass** die Einlassplatte (2) für den Luft/Elemente-Strom mehrere Klappen aufweist, wobei die in dem oberen Teil der Platte gelegenen Klappen (38) in das Innere des Sackes und nach oben gerichtet sind, und die in dem unteren Teil der Platte gelegenen Klappen (39) in das Innere des Sackes und nach unten gerichtet sind.

15. Vorrichtung nach Anspruch 1,
**dadurch gekennzeichnet, dass** die Elemente pflanzliche Abfälle, Früchte, Schnee oder Sand sind.

16. Vorrichtung nach Anspruch 1,
**dadurch gekennzeichnet, dass** sie Mittel (41) aufweist, um den aus dem Entleerungsvolumen austretenden Luftstrom zum Boden hin zu führen, damit ein Schleudern der noch in dem Luftstrom enthaltenen Teilchen oder die Verunreinigung mit dem nicht-gefilterten Rückstand vermieden wird.

17. Vorrichtung nach Anspruch 1,
**dadurch gekennzeichnet, dass** sie Mittel (41) aufweist, um den aus dem Entleerungsvolumen austretenden Luftstrom derart zu leiten, dass dieser Strom angesaugt und in der Schnittkammer (45) einer Einrichtung rezykliert wird.

18. Vorrichtung nach Anspruch 1,
**dadurch gekennzeichnet, dass** sie Mittel (51) aufweist, um zwei Positionsarten bezüglich einer Einrichtung, auf der sie montiert ist, anzunehmen: eine Benutzungsposition, wobei sich die zweite Platte in einer horizontalen Ebene befindet, und eine Position, in der gleichzeitig aufgestellt und erlaubt wird, den Sack in der Vorrichtung anzuordnen, wobei sich die zweite Platte dann erneut in einer im Wesentlichen horizontalen Ebene nach einer Drehung von ungefähr + oder - 180° befindet, d.h., dass sie bezüglich ihrer Benutzungsposition gedreht ist, wobei der genaue Drehwinkel von der Form des dem Anschlag dienenden Motors abhängt.

19. Vorrichtung nach Anspruch 1,
**dadurch gekennzeichnet, dass** sie ferner eine Schutzplatte (46) aufweist, die unter einem Sack (47) positioniert ist, um ihn vor Rissen zu schützen.

20. Vorrichtung nach einem der Ansprüche 18 und 19,
**dadurch gekennzeichnet, dass** wenn die Vorrichtung in Abstellposition angeordnet ist, die Schutzplatte (46) entlang einer horizontalen Achse (52) schwenkt, um eine Leitung (48) zu schließen, welche den aus einer Schnittkammer (45) austretenden Luft/Elemente-Strom in die Vorrichtung bringt, um den Zugang zu den Schneidmessern der Schnittkammer (45) zu schützen und so ein Zurückkehren in die Abstellposition bei völliger Sicherheit zu erlauben.

21. Vorrichtung nach Anspruch 1,
**dadurch gekennzeichnet, dass** die Einrichtung ein Rasenmäher, ein Freischneidegerät, eine Grasmähmaschine, ein Aufreißer, ein Brecher, ein Aspirator oder ein Früchtesammler ist.

22. Rasenmäher mit einem Hauptträger (21), der mit einem Antriebsmotor (22), zwei Vorderrädern (23), zwei Hinterrädern (24) und einem zentralen Schneidgehäuse (25), in welchem mindestens zwei um eine zum Boden im Wesentlichen senkrechte Achse (27) rotierende Messer befestigt sind, versehen ist, wobei mindestens zwei Messer einen Strom von Luft und Abfällen erzeugen, der radial unter der Wirkung einer Zentrifugalkraft in Richtung einer Auslassöffnung (28) entleert wird, **dadurch gekennzeichnet, dass** der Rasenmäher ferner eine Vorrichtung zum Füllen eines Sackes mit pflanzlichen Abfällen aufweist, die durch einen von dem Rasenmäher erfolgten Strom mitgeführt werden, wobei der Rasenmäher einen steifen Aufbau (1) aufweist, welcher der Einrichtung (T) zugeordnet ist, und der sich in den Sack einfügt und den Sack (8) trägt, wobei der steife Aufbau (1) erlaubt, das innere Volumen des Sackes in ein Fach (4), das für die Füllung mit pflanzlichen Abfällen bestimmt ist und in ein Fach (5), das für die Entleerung der die pflanzlichen Abfälle mitführenden Luft bestimmt ist, aufzuteilen, wobei die Vorrichtung nahe an der Auslassöffnung (28) angebracht ist und der steife Aufbau (1) mindestens zwei Platten aufweist, die eine gemeinsame Kante haben und im Wesentlichen senkrecht zueinander sind, nämlich eine erste Platte (2) für den Einlass eines Luft/Elemente-Stromes mit einer Öffnung (6), auf der der Sack (8) teilweise derart befestigt, dass das Füllvolumen (4) gebildet wird, und eine zweite Platte (3, 21) für den Auslass eines Luftstromes, die sich in den Sack (8) einfügt und Öffnungen (9) aufweist, die derart gebildet sind, dass der Auslass des Luftstromes aus dem Füllvolumen (4) in das Auslassvolumen (5) des Sackes erlaubt wird, wobei zugleich der Durchgang der Elemente verhindert wird.
